Europäisches Patentamt

European Patent Office

Office européen des brevets

(11) Publication number: **0 046 037**
**A2**

# EUROPEAN PATENT APPLICATION

(21) Application number: **81303508.6**

(22) Date of filing: **31.07.81**

(51) Int. Cl.³: **C 08 K 3/00**
**C 08 J 3/24, E 21 D 20/02**

(30) Priority: **13.08.80 GB 8026423**
**08.04.81 GB 8111031**

(43) Date of publication of application:
**17.02.82 Bulletin 82/7**

(84) Designated Contracting States:
**AT BE CH DE FR GB IT LI LU NL SE**

(71) Applicant: **Fosroc International Limited**
**36 Queen Anne's Gate**
**London, SW1H 9AR(GB)**

(72) Inventor: **Haigh, Jeffrey George**
**31 Milton Drive**
**Newport Pagnell Buckinghamshire(GB)**

(72) Inventor: **Cheriton, Leslie William**
**3 Meadow Way Wing**
**Leighton Buzzard Bedfordshire OE7 OTG(GB)**

(74) Representative: **Shaw, Laurence et al,**
**Group Patents Department Foseco Minsep International**
**Limited 285 Long Acre Nechells**
**Birmingham B7 5JR(GB)**

(54) Capsules containing self-setting compositions and the compositions.

(57) Water and a hydrated salt are both present to reduce the flammability of a flammable resin system, e.g. a capsule having two compartments each containing an interactive component and for use in e.g. a mine.

EP 0 046 037 A2

Croydon Printing Company Ltd.

CAPSULES CONTAINING SELF-SETTING COMPOSITIONS AND THE

COMPOSITIONS

The invention relates to capsules containing
self-setting compositions of low flammability and to
the compositions themselves.  Typically the compositions
contain two interactive components such as an unhardened
resin and a hardener therefor.  The resin may be polyester, epoxy or polyurethane resin.  The resin component
generally contains the resin, a resin cross-linking substance, for example styrene in the case of polyester, and
inert fillers.  The hardener usually contains a polymerisation catalyst, for example, a peroxide of an organic
acid, to promote the cross-linking reaction and it may
also contain fillers and modifiers.

The two interactive components of the compositions
can be supplied in bulk but it is more usual to provide
capsules having two compartments, each containing a separate component.  In one use, the capsule is placed in a
borehole in a substrate and a reinforcing element such as
an anchor bolt is driven into the hole with rotation to rupture the capsule and intermix the components to form
the self-setting composition which sets to anchor the
bolt.  Such a system is now widely used in building,
construction, civil engineering and mining industries
for anchoring, strata control, and like processes.

For certain applications there is a risk attendant to the use of the resinous compositions.  In mining
for example the resins can be hazardous because of their
flammability or that of some of their ingredients, e.g.
styrene.  This problem has been recognised and it is known
to replace the styrene commonly used with an organic substance having a higher flash point, such as vinyl toluene.
Such materials have drawbacks, e.g. they do not self-
extinguish and are expensive.  There is thus a need for an
improved self-setting composition of low flammability
especially for use in a capsule.

It is one object of this invention to provide
a capsule incorporating a self-setting composition formulated to have low flammability without loss of anchorage
strength.

According to one feature of the invention there

0046037

is provided a capsule containing in separate compartments the interactive components of a self-setting composition, e.g. an unhardened resin and a hardener therefor, at least one of the components comprising a
flammable substance characterised in that sufficient
water is present to suppress flame when the capsule is
exposed to heat and that some of the water is in the
form of a hydrated salt.

It is a characteristic of the invention that
water be present both as free water and as chemically
bound water in the form of a hydrated salt. If free
water alone is present, e.g. in the form of a wetted
filter, then while flame may be suppressed, the composition will not have sufficient strength and the water
may tend to separate out on storage; if the hydrated
salt only is present, then it is not possible to suppress
flame under all conditions. For this reason in accordance with the invention both forms are present and a compromise is struck between flame suppression and strength.

It is also important to have regard to the
viscosity of the interactive components; if the viscosity
is too low the mix will flow from an upward hole whereas
if it is too high the mix will be too stiff for an anchor element to be forced therein by manual labour.  In
practice the viscosity of the component should be about
5000-7,500 poise at $20^{o}C$ when measured on a Brookfield
RVF Helipath Viscometer and the viscosity of both components should be substantially the same otherwise adequate mixing may not take place.

Examples of suitable hydrated salts are
aluminium sulphate $(Al_2(SO_4)_3.18H_2O)$, ammonium aluminium
sulphate $(NH_4Al(SO_4)_2.12H_2O)$, sodium aluminium sulphate
$(NaAl(SO_4)_2.12H_2O)$, potassium aluminium sulphate $(KAl(SO_4)_2.$
$12H_2O)$, sodium sulphate $(Na_2SO_4.10H_2O)$, gypsum $(CaSO_4.2H_2O)$
and copper sulphate $(CuSO_4.5H_2O)$.  It is desirable that
the hydrated salt releases at least some of its water at
a relatively low temperature, and preferably of the order
of $150^{o}C$ or less.

Hydrated aluminium sulphate is particularly
suitable because it begins to lose its chemically bound
water at a temperature as low as $40^{o}C$.  Of the other salts
listed above hydrated ammonium aluminium sulphate releases
ten of its twelve molecules of water at $120^{o}C$, sodium sul-
phate releases all ten molecules at $100^{o}C$, copper sulphate
releases four of its five molecules at $110^{o}C$, and gypsum
releases 1½ molecules of water at $128^{o}C$.

It is preferred to optimise the ratio of water present as hydrated salt to water present as free water to give the optimum composition viscosity and set strength characteristics.

The self-setting composition will have a desired level of strength after setting i.e. the strength will not be reduced unduly compared with a capsule having the equivalent flammable ingredients. In general the compressive strength should exceed 20 Newtons/sq.mm. For this reason the hydrated salt is preferably one which when present in the quantity needed to suppress the burning of the flammable component does not substantially affect the set strength of the composition. The hydrated salt preferably makes up from about 10 to about 50% of the total composition, and may make up part of the filler portion; the other filler portion may be made up of one or more of ground firebrick or limestone, sand, silica flour, slate powder, fly ash, a clay, or the like.

In the case of hydrated aluminium sulphate and a composition containing 75% of slate powder as filler, it is desirable to replace approximately 50% of the slate powder with the hydrated aluminium sulphate.  It is
possible to include free water in the composition preferably absorbed on one of the fillers indicated above,
provided that the concentration thereof is not so high
that the strength of the set composition is weakened to
an unacceptable level.

The flammable component in the self-setting
composition may be, for example, an unhardened resin
such as a polyester, an epoxy resin or a polyurethane.
In the case of polyester resin the composition may consist of, as one interactive component, an unsaturated
polyester resin (especially a thixotropic resin), a
styrene as a cross-linking agent, an accelerator such as
dimethylaniline or cobalt naphthenate, and fillers.  As
the other interactive component the hardener may include
benzoyl peroxide or methyl ethyl ketone peroxide, plasticisers and fillers.  The hydrated salt and water may be
present in both or only one of the interactive components.

The cartridge may be of the type described and
claimed in our Letters Patent
(CBP 65      ) and                          (CBP 66      ),
both the disclosures of which are incorporated by this
reference.

According to a much preferred feature of this invention, there is provided in the self-setting composition a film forming material to form a flame suppressing film on the surface of burning matter. The film forming ingredient is preferably a wax, most conveniently a paraffin wax; another film forming ingredient is stearin. When a capsule wall is ruptured and the flammable styrene escapes, the film forming ingredient will form a film to seal the wall; if the capsule wall is burned away, the film forming ingredient will seal the exposed material. The film forming ingredient is usually present with the resin component, but may be present in the catalyst component. The proportion of the film forming ingredient will be related to the concentration of the flammable ingredient; in the case of styrene containing compositions from 5000 to 10,000 ppm of the resin is useful.

Where a wax is present, a preferred resin base comprises:

(a) a filler comprising a hydrated salt and other fillers, such as ground limestone and sands, in a ratio of 1:10 - 10:1, preferably 1:1, these fillers being wetted with water, typically in a weight ratio of filler to water of about 0.1 to about 3:1, preferably 0.1:1

(b) an unsaturated polyester resin, most preferably a thixotropic polyester resin, in a ratio of about ½ to 1:1 of the damp filler, preferably 1:4

(c) a paraffin wax at about 5,000 ppm of resin, and

(d) an accelerator such as dimethylaniline or cobalt naphthenate may be included.

A preferred hardener therefor comprises:

(i) a peroxide catalyst such as benzoyl peroxide, methyl ethyl ketone peroxide or cyclohexanone peroxide, in a weight percentage of from about 4 to 60 preferably about 25 of the catalyst component

(ii) a filler or blend of fillers such as ground limestone, gypsum, china clay, in a weight percentage of about 6 to 60 preferably about 50

(iii) water in a weight percentage of about 2 to 30 preferably about 20 and

(iv) a plasticiser such as dibutyl phthalate, in a weight percentage of 0 to 50 parts, preferably 1 part.

The resin component is mixed with the hardener component in a weight ratio of about 2 to 50:1, preferably about 8 to 15:1.

0046037

The capsules of the invention have extremely low flammability and have been found to satisfy the stringent flammability tests of the United Kingdom National Coal Board for products to be used in mines. Although the compositions will support a flame when exposed to an external flame, the flame extinguishes in a matter of seconds when the external flame is removed.

The invention includes as a separate composition, a self-setting composition as defined, to be included in a capsule or to be as a self-setting composition in bulk form and a dry component characterised by the presence in at least one interactive component of a hydrated salt.

The invention is illustrated by the following Examples in which all parts are by weight unless otherwise specified.

Example 1.

A series of evaluations was performed to determine the effect of defined additives on the flammability of the interactive components of a self-setting polyester system. One interactive component was resin including flammable styrene and the other was a catalyst component including flammable benzoyl peroxide. In each case a mix was made up, the concentration of resin, fillers and additive being adjusted to give the mix a viscosity of about 5000 poise at $20^{o}$C, measured on
a Brookfield RVF Helipath Viscometer. The amounts used
are shown in the Table. Each mix was separately subjected to a flammability test by playing a flame from a
burner on an exposed surface of a sample of the mix and
measuring the period in seconds for the flame to continue
after the burner was removed.  In another test the resin
and catalyst components were mixed in a weight ratio of
10:1 and allowed to set;  the compressive strength was
determined in Newtons/sq.mm.  The results are shown in
the Table.  The results show that free water and a hydrated salt both reduce the flammability of both components but this leads to a reduction of compressive
strength relative to a control composition.  When both
the free water and the salt are present flammability is
reduced to an acceptable level and the compressive strength
is sufficient.  For most purposes the flame should not
continue for more than about 5 seconds and a compressive
strength exceeding 20 Newtons/sq.mm. is required if an
adequate anchor bolt pull-out strength is to be achieved.

TABLE

| Capsule | RESIN COMPONENT | | | | CATALYST COMPONENT | | | | SET COMPOSITION |
|---|---|---|---|---|---|---|---|---|---|
| | Resin/ Filler | Water | Gypsum | Flame (secs) | Catalyst/ filler | Water | Gypsum | Flame | Strength (N/sq.mm) |
| 1 | 100 | 0 | 0 | 50 | 100 | 0 | 0 | .50 | 45 |
| 2 | 90 | 1 | 0 | 10 | 100 | 0 | 0 | 50 | 16 |
| 3 | 100 | 0 | 0 | 45 | 75 | 25 | 0 | 0 | 43 |
| 4 | 90 | 10 | 0 | 10 | 75 | 25 | 0 | 0 | 23 |
| 5 | 55 | 0 | 45 | 15 | 100 | 0 | 0 | 50 | 26 |
| 6 | 100 | 0 | 0 | 50 | 50 | 0 | 50 | 4 | 40 |
| 7 | 55 | 0 | 45 | 10 | 50 | 0 | 50 | 4 | 33 |
| 8 | 45 | 10 | 45 | 0 | 25 | 25 | 50 | 0 | 20 |
| 9 | 90 | 10 | 0 | 10 | 75 | 25 | 0 | 0 | 30 |
| 10 | 40 | 10 | 50 | 5 | 75 | 25 | 0 | 0 | 25 |

Example 2.

A capsule was made as follows/

resin component:

| | |
|---|---|
| accelerated polyester resin | 100 |
| hydrated aluminium sulphate $(Al_2(SO_4)_3.18H_2O)$ | 200 |
| slate powder | 10 |

Catalyst component:

| | |
|---|---|
| benzoyl peroxide | 20 |
| gypsum | 100 |
| dibutyl phthalate | 75 |
| hydrated aluminium sulphate $(Al_2(SO_4)_3.18H_2O)$ | 200 |

The resin and catalyst parts were separately fed in a ratio of 10:1 into a 40 mm diameter by 370 mm long two compartment cartridge. The capsule satisfied the stringent flammability test of the United Kingdom National Coal Board by self-extinguishing in 15 seconds.

Example 3.

A filler composition was made by blending:

| | |
|---|---|
| limestone and like fillers | 92 |
| whiting | 20 |
| silica flour | 20 |
| fine sand | 35 |
| water | 18 |

A resin component was made by blending:

        a pre-accelerated, thixotropic

        unsaturated polyester resin        59

        paraffin wax                       5000 ppm of resin


A catalyst component was made by blending:

        benzoyl peroxide              262

        water                         234

        whiting                       400

        clay                          100

The resin component was mixed with the filler component
in a weight ratio of 1:3 and inhibitor e.g. catechol dissolved in styrene was added.  The resin/filler and the
catalyst were then separately supplied to a capsule filling
machine to form capsules according to Patent
(CBP   65   ).


        In evaluations the capsule was mounted in a
frame and from below a flame was played on the capsule.
The flame burned the capsule wall and the organic material therein caught fire.  The water evaporated and
suppressed flame.  Lumps of burning matter fell down and
as they fell down the wax film enveloped them and suppressed the flame within 5 seconds.

CLAIMS

- 1 -

1.      A capsule containing in separate compartments
the interactive components of a self-setting composition
e.g. a resin and a hardener therefor, at least one of
the components comprising a flammable substance,
characterised in that sufficient water is present to
suppress flame when the capsule is exposed to heat and
that some of the water is present in the form of a
hydrated salt.

2.      A capsule according to Claim 1, characterised
in that the hydrated salt is one which releases water at
a temperature below 150°C.

3.      A capsule according to Claim 2, characterised
in that the hydrated salt is one which releases water at
a temperature below 40°C.

4.      A capsule according to any preceding Claim,
characterised in that the hydrated salt is selected from
aluminium sulphate, sodium aluminium sulphate, potassium
aluminium sulphate, sodium sulphate, gypsum and copper
sulphate.

5.      A capsule according to any preceding Claim, characterised in that the hydrated salt is present in one or each of the interactive components in a concentration of from 10% to 50% by weight of the component.

6.      A capsule according to any preceding Claim, characterised in that free water is present in one or each of the interactive components in a concentration of below the level at which it will substantially weaken the strength of the set composition or substantially affect the viscosity thereof.

7.      A capsule according to Claim 6, characterised in that one or each interactive component includes a filler selected from ground firebrick or limestone, sand or the like and the free water is absorbed into the filler.

8.      A capsule according to Claim 6 or 7, characterised in that the viscosity of the component is about 5000 poise at 20°C when measured on a Brookfield RVF Helipath Viscometer.

9.      A capsule according to any preceding Claim, characterised in that the concentration of water is sufficient to extinguish flame within 5 seconds.

10.      A capsule according to any preceding Claim, characterised by the presence of a film forming ingredient to seal drops of burning flammable material.

11.      A capsule according to Claim 10, characterised in that the film forming ingredient is a wax.

12.      A self-setting composition comprising a resin interactive component and a hardener component at least one of the components comprising a flammable substance, characterised in that sufficient water is present to suppress flame when the interactive components are exposed to heat and that some of the water is present in the form of a hydrated salt.

13.      A composition according to Claim 12, characterised in that the hydrated salt is present in one dry interactive component.